# EUROPEAN PATENT APPLICATION

(11) **EP 4 530 842 A1**
(43) Date of publication of application: **02.04.2025**
(21) Application number: 23200494.5
(22) Date of filing: 28.09.2023
(51) Int. Cl.: G06F 9/50

(54) **METHOD AND SYSTEM FOR PROCESSING OF DATA**

(71) Applicant: Axis AB, 223 69 Lund (SE)
(72) Inventor: Kevo, Antonio, 223 69 Lund (SE); Bjäreholt, Johan, 223 69 Lund (SE); Cremon, Jonas, 223 69 Lund (SE); Rappe, Ludvig, 223 69 Lund (SE); Linde, Oscar, 223 69 Lund (SE)
(74) Representative: AWA Sweden AB

(57) **Abstract**

A method (300) for processing of data by applying a first algorithm in a system comprising a server and a client device, the method comprising, at the client device: continuously receiving (S302) data; dividing (S304) the received data into M>1 subsets of data, each subset of data comprising, or being derived from, sensor data captured by a sensor during a capture time interval at a plurality of points in time; determining (S306) for each subset whether the processing of the subset should be performed by the client device or by the server, and upon determining that the processing should be performed by the client device, processing (S308) the subset into processed data by applying the first algorithm to the subset, and transmitting (S310) the processed data to the server, and upon determining that processing should be performed by the server, transmitting (S310) the subset of data to the server.

## Description

### Technical Field

The present invention relates to data processing and in particular to distribution of data processing tasks between a client-side and a server-side device.

### Background

Load sharing between a client device and a server is a method used to optimize the performance and responsiveness of an application by distributing computational tasks between the client-side and server-side devices. This concept has evolved as the demand for web-based services has increased and the capabilities of client devices have improved.

In the early days of computing, most of the processing tasks were carried out on the server-side because client devices did not have the necessary capabilities. However, as client devices have become more powerful, it has become possible to perform some of the processing tasks on the client-side, which can help to reduce the load on the server.

Cloud computing, in particular, has brought new considerations into play. Cloud servers are often charged based on usage, which includes not only the storage used but also the processing power consumed. Therefore, it may not always be cost-effective to offload all processing tasks to the server. Distributing some of the processing load to the client-side can help to reduce costs, but this needs to be balanced with other factors, such as the capabilities of the client device.

The security of data is an important concern in any computing environment. For example, client-side processing may be more secure when the data to be processed is captured by the client device itself, such as by a camera. In this case, processing the data directly on the client device can reduce the risk of the data being intercepted and manipulated during transmission to the server.

The decision between client-side and server-side processing should be made based on a careful consideration of the trade-offs between security, performance, and cost. Making such a decision may prove a difficult task and it may in some scenarios not be possible to make an optimal choice between client-side and server-side processing.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided a method for processing of data by applying a first algorithm in a system comprising a server and a client device.

The method comprises, at the client device: continuously receiving data, dividing the received data into M>1 subsets of data, each subset of data comprising, or being derived from, sensor data captured by a sensor during a capture time interval at a plurality of points in time; determining for each subset whether the processing of the subset should be performed by the client device or by the server, and upon determining that the processing should be performed by the client device, processing the subset into processed data by applying the first algorithm to the subset, and transmitting the processed data to the server, and upon determining that processing should be performed by the server, transmitting the subset of data to the server.

Determining for each subset whether the processing of the subset should be performed by the client device or by the server comprises: determining a time duration indicating a processing time of applying the first algorithm to a subset of data; determining a time ratio between the time duration and the capture time interval; upon the time ratio being less than or equal to a first threshold time ratio, determining that the client device should perform processing of each subset of the M subsets of data; upon the time ratio exceeding the first threshold time ratio, determining a portion N≤M of the M subsets, wherein N decreases with an increasing time ratio, and determining that the client device should perform processing of the N subsets of the M subsets.

The method further comprises, at the server: receiving data from the client device, and upon determining that the data received from the client device has not been processed by the client device, processing the data received from the client device by applying the first algorithm to the data received from the client device.

The client device, which also may be referred to as an edge device or just client, may in some cases comprise the sensor which captures the sensor data. The client device may for example be a camera and the sensor may be an image sensor or a microphone. In other examples, the client device is connected to the sensor.

The data received at the client device may be any type of sensor data, such as video data, audio data, radar data, gyroscope data, GPS data, etc. The data received at the client device may in some examples be derived from such sensor data, for example output of analysis of the sensor data or data otherwise having its origin in the sensor data, e.g., in the form of metadata.

The data is continuously received at the client device and divided into subsets of data, wherein each subset of data comprises or is derived from sensor data captured during a capture time interval at a plurality of points in time. The capture time interval may for example be 1, 3, 5, 8, 10, etc., seconds or any other suitable interval based on the application. The capture interval may, in the case the sensor data is video data, correspond to one or more groups of pictures (GOP) used for encoding of the video stream, each GOP including a number of image frames from the video data, such as 15 or 30 image frames. The capture interval may be predetermined or varying.

"Processed data", as defined in this specification, refers to data that has undergone some form of transformation or addition, making it distinct from its original, unprocessed state. This transformation can involve the inclusion of supplementary information, such as metadata, hash value, or results from sensor data analytics. In these instances, processed data encompasses both the original unprocessed data and the added information. Alternatively, processed data can be a modified version of the original data, such as by encoding or encrypting the original data.

The inventors have realized that in the scenario where data is continuously received by a client device, and where subsets of the received data is required to be processed by applying a first algorithm, it may be difficult to perform all processing at the client device, depending on how long it takes for the client device to perform the processing. For example, if processing of a subset of data takes longer than the time it takes to receive the next subset of data, there will be a backup of data waiting to be processed. This may in turn cause a buffer of the client device to fill up, and if it becomes completely full, further received data may be lost. An alternative is to transmit unprocessed data to the server, to be processed at the server. However, due to reasons such as efficiency, cost and security as discussed above, it may be advantageous for the client device to process as many subsets of data as possible. To solve this, the inventors have implemented a method for load sharing of the processing of data, wherein the load sharing percentage is determined by the client device based on an estimation on how long it may take to process the subset of data (the time duration) and the capture time interval of the subset of data.

The load sharing may be determined based on a time ratio between the time duration (indicating a processing time of applying the first algorithm to the subset of data) and the capture time interval. It should be noted that the time ratio may be continuously determined such that the load sharing is updated based on e.g., complexity of the received data, changes in available buffer memory at the client device, changes in available processing power at the client device, etc.

The time ratio may be compared to a threshold to determine the load sharing. For example, if the time ratio is below a threshold time ratio, it may be determined by the client device that the client device should (for the time being) perform processing of each subset of data. The threshold time ratio may be a value less than or equal to 1, which may indicate that the processing time does not result in the need of a backup of a next subset of data as discussed above.

In examples, if the time ratio is exceeding the threshold time ratio, the client device may determine that a portion of subsets of sensor data should be processed by the client device, for example every second subset, every third subset, 2/3 subsets, 3/5 subsets etc. The larger the time ratio is, the smaller portion of subsets should be processed by the client device. The portion may thus be determined such that the buffer memory of the client device will not be filled with subsets of data waiting to be processed by the client device.

The client device thus performs processing according to the decision made by the client device and transmits the processed data to the server. Upon determining, by the client device, that processing should be performed by the server, the subset of data (i.e., unprocessed) is transmitted to the server.

On the server side, the server receives data from the client device, either a processed subset of data, or an unprocessed subset of data. The server is configured to identify if a received data is processed or not, and if a set of received data is not processed, the server will perform the processing of such data. The server may for example be configured to check a value in a header of a received data which indicates if the data is processed or not. The server may check if a value of a parameter (variable, attribute, feature, element, etc.) in the received data is present or not. In other embodiments, the server may identify if the data is processed or not by identifying a format or encryption status of the data.

In some examples, determining a time duration comprises determining a processing time of applying the first algorithm to a subset of data and adding a margin to the determined processing time. Advantageously, such a margin may act as a safety margin in case the determined processing time is too short, if a complexity of the processing of the subset of data for some reason suddenly increases, if the available processing power at the client device suddenly decreases, etc.

In some embodiments, the margin is determined based on a bit size of the subset of data, wherein the margin increases with an increasing bit size. For some processing, the processing time and/or required processing power may increase with an increasing bit size, and it may as such be advantageous to increase the safety margin depending on the bit size.

In some embodiments, N (the portion) is determined by determining a number of subsets of data that can be stored in buffer memory of the client device, wherein N increases with an increasing number of subsets of data that can be stored in buffer memory of the client device. Consequently, for a smaller buffer, in which fewer subsets of data may be temporarily stored before being processed by the client device, a smaller portion of the subsets may be processed by the client device compared to the case where the buffer memory is larger. Advantageously, the portion is determined to best take advantage of the available buffer memory.

In examples, the data received at the client device comprises one of: video data or audio data, and wherein the data received at the client device is encoded using a compression standard. Advantageously, load sharing of processing of encoded data may be implemented, such that encoding of captured video data or audio data still may take place before the processing. Consequently, systems (such as legacy systems) implementing immediate encoding of captured sensor data may be supported.

In some cases, the method further comprises, at the server, using data received from the client device for streaming of media content using a streaming technique being one of: the HTTP Live Streaming, HLS, standard, or the Dynamic Adaptive Streaming over HTTP (DASH) standard, wherein a segment in the streamed media content is derived from a subset of data of the M subsets of data. The techniques for load sharing of processing of data may advantageously be adapted for DASH or HLS streaming applications. For example, the processing may include computing a hash value which in turn can be used to validate authenticity of each segment of a streamed media content. Using the techniques described herein, preparation of such validation of authenticity of streamed content may advantageously be distributed between the client device and the server device.

In some embodiments, the first algorithm is for calculating a hash of a subset of data, and wherein the processed data comprises the subset of data and the hash calculated from the subset of data. Advantageously, a hash value can be calculated for all types of data and subsequently be used to validate authenticity of data. For example, a hash value may be calculated for both raw video data and compressed video data, or for encrypted data and raw data. The hash value may be calculated using any suitable algorithm such as SHA-256, MD5, CRC32, SHA-1 etc. The processing time for calculating a hash value for a particular subset of data may advantageously be estimated based on the bit size of the subset of data, which in turn makes it possible for the client device to make accurate decisions on the load sharing, and/or use a small or zero margin to take advantage of available processing power at the client device.

In some embodiments, the first algorithm is for encrypting a subset of data, and the processed data comprises the encrypted subset of data. Similar to the hash algorithm, the processing time for encrypting a particular subset of data is closely related to the bit size of the subset of data, which in turn makes it possible for the client device to make accurate decisions on the load sharing, and/or use a small or zero margin to take advantage of available processing power at the client device.

In examples, the first algorithm is a sensor data analytics algorithm, wherein the processed data comprises the subset of data and output from the sensor data analytics algorithm. Sensor data analytics algorithms may require substantial processing power, which may increase a cost of running a cloud based server if the algorithms are applied to the subset of data at the server. At the same time, the available processing power on the client device may not be sufficient to run all analysis of received data on the client. Advantageously, the techniques described herein may provide a cost efficient way of distributing processing of data.

In embodiments, the step of determining a time duration comprises applying a moving average algorithm on historical data comprising a plurality of data points, each data point indicating a processing time of applying the first algorithm on previously received data. Monitoring the processing time required to process a subset of sensor data can be beneficial for estimating the time needed to process future subsets of sensor data. Implementing a moving average algorithm allows for the adaptation of estimated processing times in response to variations in processing time, which may occur due to changes in data complexity, fluctuations in bit sizes, and other factors. This approach facilitates that the estimated processing time is continually updated and optimized based on the most recent data trends.

In some embodiments the moving average algorithm is a weighted moving average algorithm. Using a weighted moving average algorithm has several benefits when estimating processing times. This algorithm assigns different weights to different observations, meaning that more recent data can be considered more relevant and thus given more weight in the calculations. This may be especially useful in scenarios where data patterns change over time, as it allows the algorithm to adapt more quickly to recent changes. For example, if the complexity of the sensor data or the bit sizes suddenly increase, a weighted moving average algorithm will adapt more quickly to these changes than a simple moving average algorithm, providing a more accurate and timely estimate of the processing time required. This, in turn, can help in optimizing the system's performance, as it can more accurately predict the resources required to process the incoming data, reducing the risk of buffer overflows or other system overloads, and thus improving load sharing.

In some embodiments, the step of determining a time duration comprises using a bit size of the subset of data. For example, a look up table may be used. This may be a low complexity way of estimating the processing time.

According to a second aspect of the present invention, there is provided a system for processing of data by applying a first algorithm, the system comprising a server and a client device.

The the client device comprises: one or more processors; and one or more non-transitory computer-readable media storing first computer executable instructions that, when executed by the one or more processors, cause the client device to perform actions comprising: continuously receiving data; dividing the received data into M>1 subsets of data, each subset of data comprising, or being derived from, sensor data captured by a sensor during a capture time interval at a plurality of points in time; determining for each subset whether the processing of the subset should be performed by the client device or by the server, and upon determining that the processing should be performed by the client device, processing the subset into processed data by applying the first algorithm to the subset, and transmitting the processed data to the server, and upon determining that processing should be performed by the server, transmitting the subset of data to the server; wherein determining comprises: determining, a time duration indicating a processing time of applying the first algorithm to a subset of data; determining a time ratio between the time duration and the capture time interval; upon the time ratio being less than or equal to a threshold time ratio, determining that the client device should perform processing of each subset of the M subsets of data; upon the time ratio exceeding the threshold time ratio, determining a portion N≤M of the M subsets, wherein N decreases with an increasing time ratio, and determining that the client device should perform processing of the N subsets of the M subsets.

The server comprises: one or more processors; and one or more non-transitory computer-readable media storing second computer executable instructions that, when executed by the one or more processors, cause the server to perform actions comprising: receiving data from the client device; upon determining that the data received from the client device has not been processed by the client, processing the data received from the client device by applying the first algorithm to the data received from the client device.

In some embodiments, the first algorithm is for calculating a hash of a subset of data, and the processed data comprises the subset of data and the hash calculated from the subset of data.

In some embodiments, the client device is a monitoring camera.

The second aspect may generally have the same features and advantages as the first aspect.

Further features and advantages of the invention will become apparent from the following description of preferred embodiments of the invention, given by way of example only, which is made with reference to the accompanying drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise.

The steps of any method disclosed herein do not have to be performed in the exact order disclosed, unless explicitly stated.

### Brief Description of the Drawings

The above, as well as additional objects, features, and advantages of the present invention, will be better understood through the following illustrative and non-limiting detailed description of embodiments of the present invention, with reference to the appended drawings, where the same reference numerals will be used for similar elements, wherein:
Figure 1 shows subsets of data and a graph indicating offloading of processing of the subsets to a server, according to embodiments;
Figure 2 shows a system comprising a client device and a server, the system implementing load sharing of data processing tasks, according to embodiments;
Figure 3 shows a flow chart of a method for processing of data by applying a first algorithm in the system of figure 2;
Figure 4 shows a flow chart of a method for determining load sharing between the client and server, according to embodiments.

### Detailed Description

In a system including a client side device (the client device or edge device) and a server side device (the server), computational tasks may be distributed between the client-side device and server-side device. It may be beneficial for several reasons to do as much of the processing as possible at the client device. For instance, the client device is usually entirely under the control and ownership of a user, which inherently makes processing tasks cost-effective, compared to offloading the processing tasks to the server which may be charged based on usage. Moreover, client-side processing may be more secure when the data to be processed is captured by the client device itself, due to being fully controlled by the user. Transmitting raw data to a server for processing may raise concerns about data security and privacy, so there is a preference for processing data on the client device and only offloading when absolutely necessary. However, processing complex or large volumes of data can quickly overwhelm the client device, leading to delays, data loss, or a degraded user experience. The present disclosure proposes a system that may address these challenges by dynamically offloading processing to a server when the client device lacks sufficient CPU power or when a memory buffer is at risk of filling up. This approach may optimize the use of available resources, may prevent data loss, and may provide a flexible solution that can adapt to different scenarios and requirements.

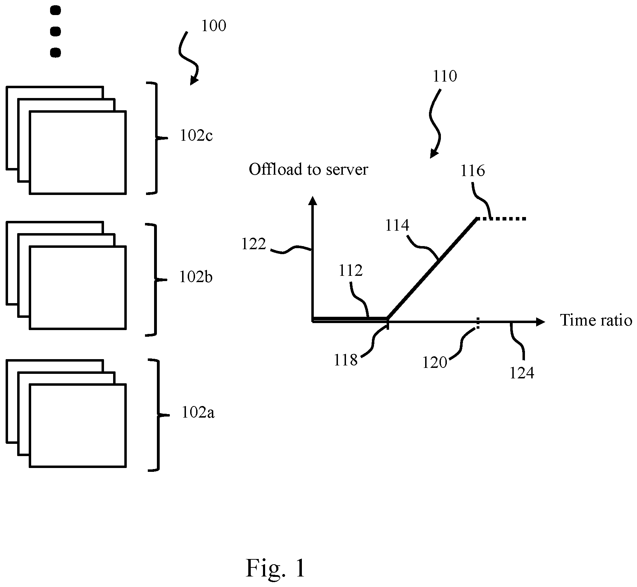

Figure 1 shows by way of example data 100 received at a client device. The data is continuously received at the client device. In figure 1, the data 100 is exemplified as image frames from a video. The client device may for example be a camera capturing video. In other examples, the data 100 may comprise or be derived from other types of sensor data, such as audio data, radar data, etc. The data 100 may thus in some embodiments comprise such sensor data. In other embodiments, the data 100 may be derived from such sensor data, and for example comprise output of analysis of the sensor data or data otherwise having its origin in the sensor data, e.g., in the form of metadata. The data 100 received at the client device is divided into chunks, or subsets 102a-c. Segmenting the data into smaller portions can enhance efficiency during transmission to a server, for instance, for storage purposes. Advantageously, such a portion can be transmitted in a single HTTP(S) POST or PUT request. Each subset 102a-c of data thus comprises (or is derived from) sensor data captured by a sensor during a capture time interval at a plurality of points in time. For video data, such capture time interval may be 3-10 seconds of video data (image frames). For other types of data, other intervals may be used, based on requirements and applications. The capture time interval may vary between the subsets 102a-c. In some embodiments, the capture time interval is similar between the subsets. In some embodiments, the capture time interval is predetermined and thus the same between the subsets.

In some embodiments, for example when the data 100 comprises video data or audio data, the data may be received in an encoded format, such as H.264, H.265, AV1, etc. for video data, or MP3, AAC, FLAC etc for audio data. In other embodiments, the data 100 comprises raw sensor data.

In many applications, different processing of the subsets 102a-c of data may be needed. For example, calculating a hash value for each subset 102a-c may be beneficial from a data security perspective, to be able to verify that the data has not been manipulated, e.g., after being uploaded to the server. Other processing tasks include encryption, sensor data analytics, sensor data processing, etc. The processing thus comprises applying a first algorithm (to achieve the hash value, encryption, analytics, etc.) to the subset of data 102a-c.

Since the data 100 is continuously received, it may be important to perform the processing in real time to prevent loss of data. The client device may comprise a buffer memory for temporarily storing subsets of data waiting to be processed, but for complex processing, or when the available processing power at the client device is limited, such a buffer may fill up resulting in loss of data. Due to data segmentation strategy, dividing received data 100 into subsets 102a-c of data, real time processing at the client device implies that processing time for applying the first algorithm to a subset 102a-c of data divided by the capture time interval of a subset of data 102a-c should at least be less than 1 (a threshold time ratio). To add some safety margins, the threshold time ratio may be less than 1. Alternatively, or additionally, a margin may be added to the processing time.

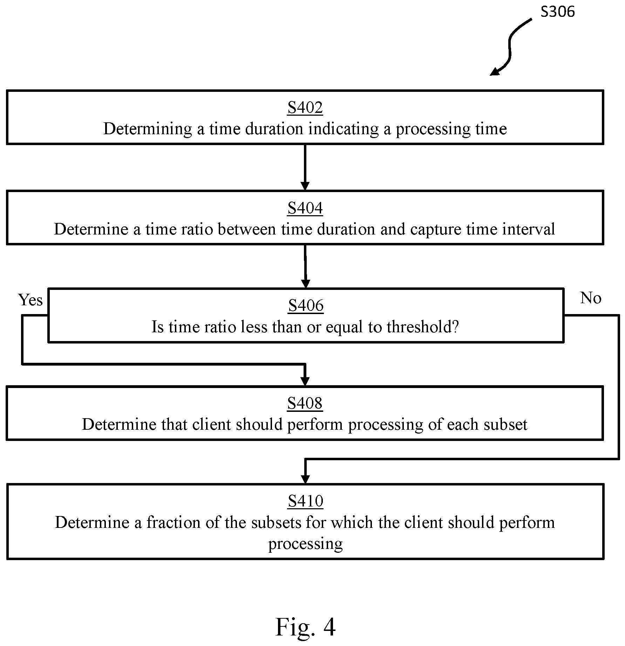

Figure 1 further comprises a graph 110 schematically describing offloading as being dependent on a time ratio. Embodiments of how to determine whether to offload or not will now be described in conjunction with figure 4. The time ratio is based on determining S402 a time duration which indicates processing time of applying the first algorithm to the subset of data 102a-c. The time duration may in some cases only relate to an estimated time of processing a subset of data 102a-c. In some cases, determining S402 a time duration comprises determining/estimating a processing time of applying the first algorithm to a subset of data and adding a margin to the determined processing time.

The time duration for a particular subset of data may be determined S402 by looking at the processing time for previously processed subsets of data. For example, determining a time duration may comprise applying a moving average algorithm on historical data comprising a plurality of data points, each data point indicating a processing time of applying the first algorithm on previously received data. For example, if the historical data comprises the data points [3.6, 3.2, 2.9, 2.8], the time duration (for a moving average with a window of size 4) may be determined to be 3.1. In some embodiments, the moving average algorithm is a weighted moving average algorithm. The weights may for example be larger for newer datapoints. For the same historical data as discussed above, where the first data point is the newest datapoint, and where the weights are 0.5, 0.3, 0.15, 0.05, the time duration may be determined to be 3.4.

For some types of processing, the processing time may be determined S402 based on the bit size of the subset of data. For example, the time required to compute a hash value typically depends on the size of the data. Most cryptographic hash functions, like SHA-256, operate on data in blocks, processing each block sequentially. As the data size increases, it is divided into more blocks, which take more time to hash. While factors such as the specific hash function and the hardware can influence efficiency, in general, larger data sizes mean longer processing times. The processing time for a subset of data may thus be determined using a lookup table or similar. The same approach may be used for other processing such as encryption, where the time required to encrypt data largely depends on its size. Many encryption algorithms, such as AES, work by encrypting data in chunks or blocks. As the data size grows, more blocks need to be encrypted, increasing the processing time.

In case the capture time interval changes between subsets 102a-c of data and the time duration is calculated based on historical data, also the capture time interval is included in the calculation S402 of the time duration such that the historical data is weighted based on the difference between the capture time interval of a data point in the historical data and the capture time interval of the current subset.

The time ratio is thus determined S402 by dividing the time duration with the capture time interval. Typically, the capture time interval does not substantially differ between subsets of data, in which case the time ratio may be determined S404 using a capture time interval of any of the subsets 102a-c of data. In other embodiments, the capture time interval of the latest subset of data received/determined at the client device is used, or an average of the K latest subset of data received/determined at the client device, or by any other suitable calculation.

The graph 110 of figure 1 shows comparison S406 between the time ratio and a first threshold time ratio 118. If the time ratio is less than or equal to the threshold time ratio 118, it may be determined S408 that no processing is offloaded to the server, and the client device should perform processing of each subset of the M subsets of data. This is visualized by section 112 of the curve of the graph 110. The first threshold time ratio may be 1 or a value smaller than 1 such as 0.8 (to add some safety margins to the processing decision)

If the time ratio exceeds the first threshold time ratio 118, it may be determined S410 that offloading some of the processing to the server may be necessary to avoid loss of data. Advantageously, a subset of data is thus either processed at the client or at the server, to reduce complexity. Depending on the time ratio and how it compares to the first threshold time ratio 118, a portion (M-N) of the M subsets is sent to the server without being processed, while the remaining N subsets are processed at the client. As can be seen in figure 1, N decreases with an increasing time ratio, as visualized by section 114 of the curve of the graph 110. The portion may be determined by dividing 1 with the time ratio. For example, if the time ratio is near 2, every second subset of data may be processed at the client. If the time ratio is around 1.5, two out of three subsets of data may be processed at the client. In some embodiments, the time ratio is rounded to the next integer (a ceiling function) to determine a rounded value (J) such that every J^{th} subset is processed by the client.

In some embodiments (not shown in figure 4), upon the time ratio being equal to or exceeding a second threshold time ratio 120, it may be determined that the server should perform processing of each subset of the M subsets, as visualized by section 116 of the curve of the graph 110. The second threshold time ratio 120 may thus act as a safety mechanism in case the processing is too complex for the client to handle at all. In other embodiments, the line of the graph 110 turns into a sigmoid function as the time ratio increases, such that an increasingly smaller portion of the subsets is processed by the client, such as 1 per 50, 1 per 100, 1 per 200 etc.

The gradient of the curve of the diagram 110 may for example depend on a determined number of subsets of data that can be stored in buffer memory of the client. In case a large number of subsets can be stored, more subsets may be processed by the client device. In other words, in some cases, N increases with an increasing number of subsets of data that can be stored in buffer memory of the client.

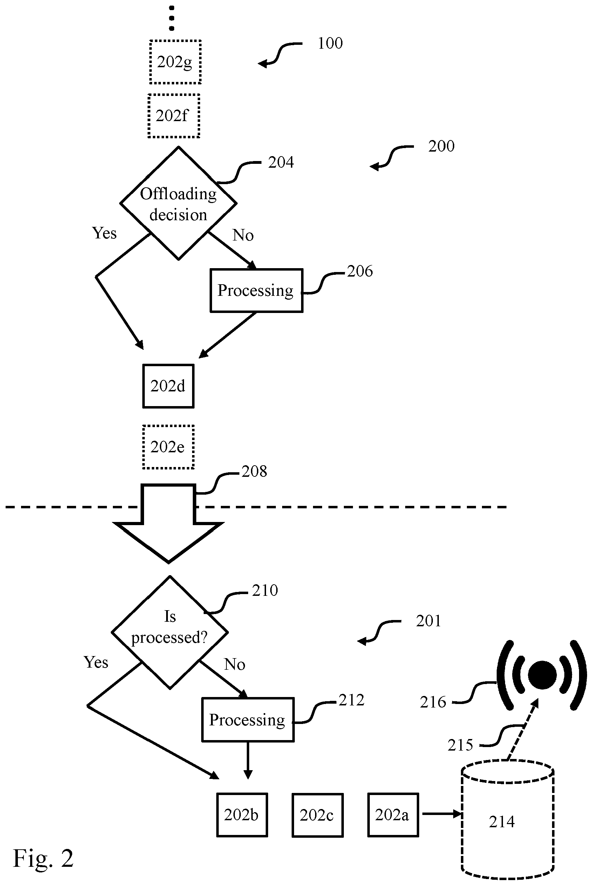

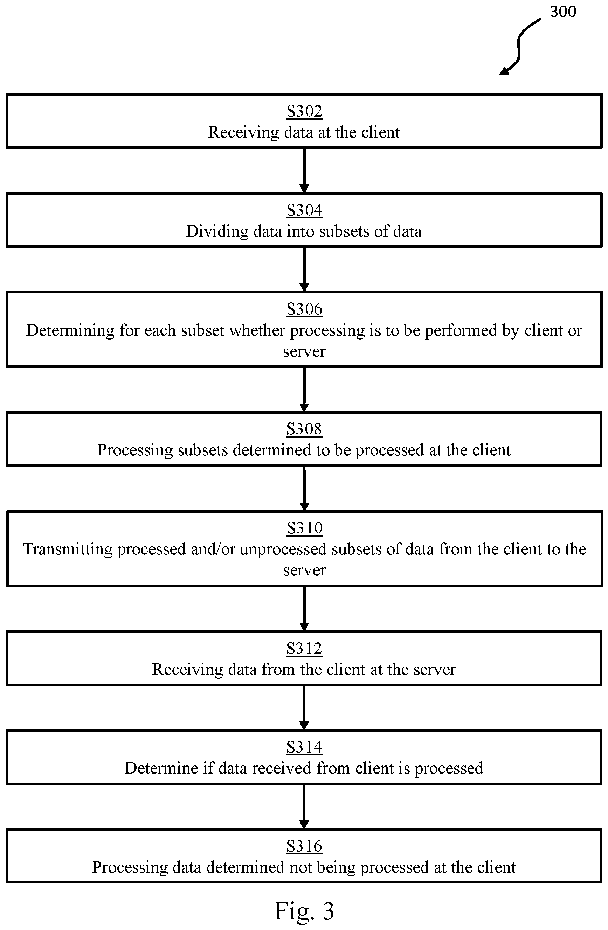

Figure 2 shows a system comprising a client device 200 and a server 201. The system implementing load sharing of data processing tasks, which now will be described in conjunction with figure 3 showing a flow chart of such load sharing.

The client device 200 generally comprises one or more processors and one or more non-transitory computer-readable media storing first computer executable instructions that, when executed by the one or more processors, cause the client device to perform actions as described herein.

The server 201 generally comprises one or more processors and one or more non-transitory computer-readable media storing second computer executable instructions that, when executed by the one or more processors, cause the client device to perform actions as described herein.

Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

In figure 2, references 202 visualize subsets of data, where a dashed square indicates an unprocessed subset of data, while a solid line square indicates a processed subset of data.

The client continuously receives S302 data 100 which is divided into M>1 subsets of data, each subset of data comprising, or being derived from, sensor data captured by a sensor during a capture time interval at a plurality of points in time. The sensor data is thus captured in a sequence over time and the letter after the reference 202 indicates a sequence order of the subsets of data, where "a" indicates the first and "g" indicates the last.

For the subsets of data (e.g., subsets 202f and 202g), the client device makes an offloading decision 204, i.e., determining S306 whether processing is to be performed by client 200 or server 201. The determining includes calculating a time ratio as described in conjunction with figure 1. It should be noted that such a time ratio may be calculated for each subset of data, or for every K subset of data, where K may be 2, 4, 10, 20, etc. In the latter case, the offloading decision 204 (processing all subsets at the client 200, or offloading a portion/all of the subsets for processing at the server 201) is valid for every subset of data until next time the time ratio is calculated.

Based on the determining S306, a subset of data is either processed S308 at the client such that a processed subset of data can be transmitted S310 to the server, or transmitted S310 unprocessed to the server 201 for processing. The client comprises a processing component 206 configured to apply the first algorithm to the subset of data. The processing component 206 may further comprise, or be connected to, a buffer memory (not shown) for temporarily storing subsets of data to be processed. The buffer memory may be referred to as a cache memory and may comprises any suitable type of memory such as a DRAM or SRAM memory.

The client 200 is configured to transmit 208, S310 data to the server 201 and the server is configured to receive S312 data. To transmit data from the client 200 to the server 201, whether through wired or wireless means, several components may be involved in the transmission 208. Transceivers, which can both send and receive data, may be utilized in the process. In wired contexts, cables, such as Ethernet or fibre-optic cables, may connect devices, while connectors and switches may help in directing the data flow. For wireless transmissions, antennas may handle the sending and capturing of radio waves, and modems or routers may process and route this data to the intended devices. Additionally, protocols and interface controllers may be used to ensure smooth data transmission between the devices. Examples of such protocols include HTTP(S), and each subset of data (whether processed or not) may be transmitted in a single HTTP(S) POST or PUT request. Apart from HTTP(S), there are numerous other protocols that may be used in computing and networking. For example, FTP, or File Transfer Protocol, is employed for transferring files between computers within a network. Other suitable protocols include Message Queuing Telemetry Transport (MQTT) or User Datagram Protocol (UDP). Each of these protocols serves different purposes in various networking scenarios.

As can be seen in figure 2, the subsets of data may not necessarily be transmitted in sequential order (according to the capturing time of the underlying sensor data). In figure 2, the unprocessed subset of data 202e is transmitted 208, S310 before the processed subset of data 202d, even though they are in reverse sequential order. The data 202e, 202d may include an index in e.g., a header to indicate the sequential order to the server.

The processed subset of data, e.g., subset 202d may contain data depending on the processing 206 performed on the subset (application of the first algorithm). For example, if the first algorithm is for calculating a hash of a subset of data, the processed data may comprise the subset of data (i.e., the unprocessed subset of data) and the hash calculated from the subset of data (for example provided in a header or as metadata). If the first algorithm is for encrypting a subset of data, and the processed data may comprise the encrypted subset of data. If the first algorithm is a sensor data analytics algorithm, the processed data may comprise the subset of data (i.e., the unprocessed subset of data) and the output from the sensor data analytics algorithm provided as metadata. Other types of processing, e.g., applying privacy filters to image data, may result in that the processed subset of data comprises the modified subset of data, for example with blurred human faces.

At the server side 201, data is received S312 from the client 200. The server 201 implements functionality 210 for determining S314 whether the data received S312 from the client 200 is processed or not. Such functionality 210 may for example comprise checking the format of the received data, checking the header of the received data for a flag or a set value, checking a metadata section of a header section of the received data, etc.

If it is determined S314 that a received data is not processed, the server is configured to apply the first algorithm to the received data using a processing component 212. Similar to the client 200, the processing component 212 of the server may further comprise, or be connected to, a buffer memory (not shown) for temporarily storing subsets of data to be processed. The buffer memory may be referred to as a cache memory and may comprise any suitable type of memory such as a DRAM or SRAM memory.

Consequently, data determined S314 not being processed by the client is processed S316 at the server 201. After this, all M subsets of data have been processed, as indicated in figure 2 by the solid line squares 202a-c. In some embodiments, the processed subsets of data are stored in memory 214. In case the processing involves calculation of a hash value, the hash values may be stored in the memory 214 and subsequently used to verify authenticity of the subsets of data when being read from the memory 214.

The hash values may for example be stored in a blockchain. In the realm of media (video, audio, etc.) verification, integrating hash values into a blockchain system offers a promising way to ensure the authenticity of media segments. As described above, when a segment of a media is created or acquired, its hash value is generated (at the client or at the server). This hash value, which is essentially a fixed-size string or number derived from the media data, acts as a unique fingerprint for that segment. Given the properties of cryptographic hash functions, even a minor change in the media segment will result in a drastically different hash value. Once the hash value is received at the server 201, or computed at the server 201, it is recorded onto a blockchain. The blockchain, a decentralized and immutable ledger, provides a chronological record of all entries made. Each entry, or block, contains a link to the previous block, thereby chaining them together. Once a block with a particular hash value is added to the blockchain, it's virtually impossible to change without altering all subsequent blocks, which would be detected by the system's participants. Later, if someone wishes to verify the authenticity of a media segment, they can generate a hash value from the segment in question and check it against the blockchain. If the hash value exists on the blockchain and matches the one generated from the segment, it confirms that the media has not been altered since its hash was recorded. Such a system essentially leverages the immutability of blockchains to counteract the rampant issues of deepfakes, media tampering, and misinformation. By ensuring the integrity of media segments, stakeholders can trust the authenticity of content, whether it is for journalistic integrity, legal evidence, or historical archiving.

In some embodiments, the server 201, or the memory 214 of the server 201, is connected 215 to a streaming component 216 for streaming of media content using a streaming technique being one of: the HTTP Live Streaming, HLS, standard, or the Dynamic Adaptive Streaming over HTTP (DASH) standard, wherein a segment in the streamed media content is derived from a subset of data of the M subsets of data. Consequently, the techniques described herein may advantageously be implemented in a context of streaming, such that processing of subsets of data, which later each will form a segment in the streamed media content, are processed as a unit already from the start, which may reduce complexity, increase security, ensure performance, and thus provide an advantageous framework for processing and streaming.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims

## Claims

1. A method (300) for processing of data by applying a first algorithm in a system comprising a server (201) and a client device (200), the method comprising, at the client device:
continuously receiving (S302) data (100);
dividing (S304) the received data into M>1 subsets (102a-c) of data, each subset of data comprising, or being derived from, sensor data captured by a sensor during a capture time interval at a plurality of points in time;
determining (S306) for each subset whether the processing of the subset should be performed by the client device or by the server, and upon determining that the processing should be performed by the client device, processing (206, S308) the subset into processed data (202d) by applying the first algorithm to the subset, and transmitting (208, S310) the processed data to the server, and upon determining that processing should be performed by the server, transmitting (208, S310) the subset of data (202e) to the server;
wherein determining comprises:
determining (S402), a time duration indicating a processing time of applying the first algorithm to a subset of data;
determining (S404) a time ratio (124) between the time duration and the capture time interval;
upon the time ratio being less than or equal to a threshold time ratio (118), determining (S408) that the client device should perform processing of each subset of the M subsets of data; and
upon the time ratio exceeding the threshold time ratio determining (S408) a portion (122) N≤M of the M subsets, wherein N decreases with an increasing time ratio, and determining that the client device should perform processing of the N subsets of the M subsets;
wherein the method further comprises, at the server:
receiving (S312) data from the client device, and
upon determining (S314) that the data received from the client device has not been processed by the client device, processing (212, S316) the data received from the client device by applying the first algorithm to the data received from the client device.

2. The method of claim 1, wherein determining a time duration comprises determining a processing time of applying the first algorithm to a subset of data and adding a margin to the determined processing time.

3. The method of claim 2, further comprising determining the margin based on a bit size of the subset of data, wherein the margin increases with an increasing bit size.

4. The method of any one of claims 1-3, wherein N is determined by determining a number of subsets of data that can be stored in buffer memory of the client device, wherein N increases with an increasing number of subsets of data that can be stored in buffer memory of the client device.

5. The method of any one of claims 1-4, wherein the data received at the client device comprises one of: video data or audio data, and wherein the data received at the client device is encoded using a compression standard.

6. The method of claim 5, further comprising, at the server, using (215) data received from the client device for streaming (216) of media content using a streaming technique being one of: the HTTP Live Streaming, HLS, standard, or the Dynamic Adaptive Streaming over HTTP (DASH) standard, wherein a segment in the streamed media content is derived from a subset of data of the M subsets of data.

7. The method of any one of claims 1-6, wherein the first algorithm is for calculating a hash of a subset of data, and wherein the processed data comprises the subset of data and the hash calculated from the subset of data.

8. The method of any one of claims 1-6, wherein the first algorithm is for encrypting a subset of data, and wherein the processed data comprises the encrypted subset of data.

9. The method of any one of claims 1-6, wherein the first algorithm is a sensor data analytics algorithm, wherein the processed data comprises the subset of data and output from the sensor data analytics algorithm.

10. The method of any one of claims 1-9, wherein the step of determining a time duration comprises applying a moving average algorithm on historical data comprising a plurality of data points, each data point indicating a processing time of applying the first algorithm on previously received data,

11. The method of claim 10, wherein the moving average algorithm is a weighted moving average algorithm.

12. The method of any one of claims 1-9, wherein the step of determining a time duration comprises using a bit size of the subset of data.

13. A system for processing of data by applying a first algorithm, the system comprising a server and a client device, the client device comprising:
one or more processors; and
one or more non-transitory computer-readable media storing first computer executable instructions that, when executed by the one or more processors, cause the client device to perform actions comprising:
continuously receiving data;
dividing the received data into M>1 subsets of data, each subset of data comprising, or being derived from, sensor data captured by a sensor during a capture time interval at a plurality of points in time;
determining for each subset whether the processing of the subset should be performed by the client device or by the server, and upon determining that the processing should be performed by the client device, processing the subset into processed data by applying the first algorithm to the subset, and transmitting the processed data to the server, and upon determining that processing should be performed by the server, transmitting the subset of data to the server;
wherein determining comprises:
determining, a time duration indicating a processing time of applying the first algorithm to a subset of data;
determining a time ratio between the time duration and the capture time interval;
upon the time ratio being less than or equal to a threshold time ratio, determining that the client device should perform processing of each subset of the M subsets of data;
upon the time ratio exceeding the threshold time ratio, determining a portion N≤M of the M subsets, wherein N decreases with an increasing time ratio, and determining that the client device should
perform processing of the N subsets of the M subsets; the server comprising:
one or more processors; and
one or more non-transitory computer-readable media storing second computer executable instructions that, when executed by the one or more processors, cause the server to perform actions comprising:
receiving data from the client device;
upon determining that the data received from the client device has not been processed by the client device, processing the data received from the client device by applying the first algorithm to the data received from the client device.

14. The system of claim 13, wherein the first algorithm is for calculating a hash of a subset of data, and wherein the processed data comprises the subset of data and the hash calculated from the subset of data.

15. The system of any one of claims 13-14, wherein the client device is a monitoring camera.

## Amended claims

### Amended claims in accordance with Rule 137(2) EPC.

1. A method (300) for processing of data by applying a first algorithm in a system comprising a server (201) and a client device (200), the method comprising, at the client device:
continuously receiving (S302) data (100);
dividing (S304) the received data into M>1 subsets (102a-c) of data, each subset of data comprising, or being derived from, sensor data captured by a sensor during a capture time interval at a plurality of points in time, wherein the capture time interval is the same for each of the M subsets of data;
determining (S306) for each subset whether the processing of the subset should be performed by the client device or by the server, and upon determining that the processing should be performed by the client device, processing (206, S308) the subset into processed data (202d) by applying the first algorithm to the subset, and transmitting (208, S310) the processed data to the server, and upon determining that processing should be performed by the server, transmitting (208, S310) the subset of data (202e) to the server;
wherein determining comprises:
determining (S402), a time duration indicating a processing time of applying the first algorithm to a subset of data among the M subsets of data;
determining (S404) a time ratio (124) between the time duration and the capture time interval;
upon the time ratio being less than or equal to a threshold time ratio (118), wherein the threshold time ratio is equal or less than one, determining (S408) that the client device should perform processing of each subset of the M subsets of data; and
upon the time ratio exceeding the threshold time ratio determining (S408) a portion (122) N≤M of the M subsets, wherein N decreases with an increasing time ratio, and determining that the client device should perform processing of the N subsets of the M subsets, wherein N is determined by determining a number of subsets of data that can be stored in buffer memory of the client device, wherein N increases with an increasing number of subsets of data that can be stored in buffer memory of the client device;
wherein the method further comprises, at the server:
receiving (S312) data from the client device, and
upon determining (S314) that the data received from the client device has not been processed by the client device, processing (212, S316) the data received from the client device by applying the first algorithm to the data received from the client device.

2. The method of claim 1, wherein determining a time duration comprises determining a processing time of applying the first algorithm to a subset of data and adding a margin to the determined processing time.

3. The method of claim 2, further comprising determining the margin based on a bit size of the subset of data, wherein the margin increases with an increasing bit size.

4. The method of any one of claims 1-3, wherein the data received at the client device comprises one of: video data or audio data, and wherein the data received at the client device is encoded using a compression standard.

5. The method of claim 4, further comprising, at the server, using (215) data received from the client device for streaming (216) of media content using a streaming technique being one of: the HTTP Live Streaming, HLS, standard, or the Dynamic Adaptive Streaming over HTTP (DASH) standard, wherein a segment in the streamed media content is derived from a subset of data of the M subsets of data.

6. The method of any one of claims 1-5, wherein the first algorithm is for calculating a hash of a subset of data, and wherein the processed data comprises the subset of data and the hash calculated from the subset of data.

7. The method of any one of claims 1-5, wherein the first algorithm is for encrypting a subset of data, and wherein the processed data comprises the encrypted subset of data.

8. The method of any one of claims 1-5, wherein the first algorithm is an algorithm for performing analytics to the sensor data, wherein the processed data comprises the subset of data and output from the first algorithm.

9. The method of any one of claims 1-8, wherein the step of determining a time duration comprises applying a moving average algorithm on historical data comprising a plurality of data points, each data point indicating a processing time of applying the first algorithm on previously received data,

10. The method of claim 9, wherein the moving average algorithm is a weighted moving average algorithm.

11. The method of any one of claims 1-8, wherein the step of determining a time duration comprises using a bit size of the subset of data.

12. A system for processing of data by applying a first algorithm, the system comprising a server, a sensor, and a client device, the client device comprising:
one or more processors; and
one or more non-transitory computer-readable media storing first computer executable instructions that, when executed by the one or more processors, cause the client device to perform actions comprising:
continuously receiving data;
dividing the received data into M>1 subsets of data, each subset of data comprising, or being derived from, sensor data captured by the sensor during a capture time interval at a plurality of points in time, wherein the capture time interval is the same for each of the M subsets of data;
determining for each subset whether the processing of the subset should be performed by the client device or by the server, and upon determining that the processing should be performed by the client device, processing the subset into processed data by applying the first algorithm to the subset, and transmitting the processed data to the server, and upon determining that processing should be performed by the server, transmitting the subset of data to the server;
wherein determining comprises:
determining, a time duration indicating a processing time of applying the first algorithm to a subset of data among the M subsets of data;
determining a time ratio between the time duration and the capture time interval;
upon the time ratio being less than or equal to a threshold time ratio, wherein the threshold time ratio is equal or less than one, determining that the client device should perform processing of each subset of the M subsets of data;
upon the time ratio exceeding the threshold time ratio, determining a portion N≤M of the M subsets, wherein N decreases with an increasing time ratio, and determining that the client device should perform processing of the N subsets of the M subsets, wherein N is determined by determining a number of subsets of data that can be stored in buffer memory of the client device, wherein N increases with an increasing number of subsets of data that can be stored in buffer memory of the client device;
the server comprising:
one or more processors; and
one or more non-transitory computer-readable media storing second computer executable instructions that, when executed by the one or more processors, cause the server to perform actions comprising:
receiving data from the client device;
upon determining that the data received from the client device has not been processed by the client device, processing the data received from the client device by applying the first algorithm to the data received from the client device.

13. The system of claim 12, wherein the first algorithm is for calculating a hash of a subset of data, and wherein the processed data comprises the subset of data and the hash calculated from the subset of data.

14. The system of any one of claims 12-13, wherein the client device is a monitoring camera.
